# EUROPEAN PATENT SPECIFICATION

(11) **EP 0 801 217 B1**
(45) Date of publication and mention of the grant of the patent: **19.06.2002**
(21) Application number: 96301721.5
(22) Date of filing: 13.03.1996
(51) Int. Cl.: F02C 3/09, F23R 3/38, F01D 25/18, F01D 25/16, F02C 7/06

(54) **Turbine engine**
Gasturbine
Turbine à gaz

(43) Date of publication of application: 15.10.1997
(60) Divisional application: 01203222.3
(73) Proprietor: Technical Directions Inc., Ortonville, MI 48462 (US)
(72) Inventor: Chute, Richard (NMI), Harsens Island, MI 48028 (US); Brooks, Vern E., Ortonville, Michigan48462 (US)
(74) Representative: Orchard, Oliver John

(56) References cited:
- DE-A- 2 106 589
- DE-B- 1 139 328
- FR-A- 2 602 003
- FR-A- 2 636 093
- GB-A- 1 094 540
- US-A- 3 898 793
- US-A- 5 263 315

## Description

This invention relates to a turbine engine having structural and functional features for reducing manufacturing cost and improving function.

The prior art is replete with turbine engine patents purporting to reduce cost and/or improving function. These patents are generally concerned with structural and functional improvements of prior engines.

Many available small gas turbine engines were designed by down-sizing large, expensive engines. Unfortunately, gas turbine engines have not readily scaled down in an effective cost proportional basis and a thrust proportional basis. The engine disclosed herein was designed to be a small gas turbine engine suitable for many applications on a cost and thrust basis. The engine is particularly suited to propel small aires vehicles of many types, e.g., expendable air vehicles such as drones and missiles.

The turbine engine in DE-B-11 39 328 relates to the turbine engine disclosed herein by including shaft bearing lubrication with an air/fuel mixture that is discharged into the engine combustion chamber after the mixture passes through a shaft bearing. In a related manner the turbine engine in FR-A-2 636 093 includes shaft bearing lubrication with an air/oil mixture that is discharged into the engine turbine after the mixture passes through the shaft bearings.

An object of this invention is to provide a low cost turbine engine.

Another object of this invention is to provide a relatively small turbine engine.

Another object of this invention is to provide an expendable, low cost and relatively small turbine engine.

The invention relates to a gas turbine engine as disclosed in DE-B-11 39 328 represented in the pre-charactering part of claim 1 which includes a gas turbine engine comprising a housing including an outer wall having an air inlet and exhaust affixed to opposite ends thereof. A shaft including first and second axially spaced apart antifriction bearings (246,248) is mounted for rotation in the housing by a bearing assembly. A compressor and a turbine are affixed to opposite ends of the shaft. An annular combustion chamber includes radially spaced apart inner and outer liners and an end liner extending radially inward from an end of the outer liner at a primary combustion zone end of the chamber and axially upstream of an exhaust end of the chamber. The liners are concentric to the shaft and are disposed between the compressor and turbine. An outer annulus is defined between the outer wall and outer liner. A diffuser directs compressor discharge air to the outer annulus and includes a first support portion affixed to the housing. A nozzle directs exhaust from the combustion chamber to the turbine and includes a first support portion affixed to the housing. The nozzle includes a second support portion having a radially inward portion. A fuel slinger is affixed to the shaft and positioned to discharge fuel radially outward into the primary combustion zone. Means are provided to direct air from the outer annulus to the combustion chamber. Air/fuel delivery means (236d, 236c) supplies air from the outer annulus (260) and fuel to the first bearing (246) and then to the fuel slinger (238).

The invention is characterised by the bearing assembly including a support tube concentric to the shaft and affixed to the housing between the compressor and turbine. The tube has a first end positioned adjacent the turbine and a second end positioned adjacent the slinger. The first and second bearings, are respectively associated with the tube first and second ends, and support the shaft on interior portions of tube. An air/fuel annulus is defined between the support tube and the shaft and provides a flow path for supplying an air/fuel mixture to the slinger and for lubricating the bearings. The air/fuel delivery means supplies the air/fuel mixture to the air/fuel annulus at an upstream position axially interposed the turbine and the first bearing.

Turbine engines according to the invention are shown in the accompanying drawing in which:
Figure 1 is a cross-sectional view of an engine according to the invention, Figure 1A-1D illustrate details of a diffuser in the engine of Figure 1,
Figures 2 and 3 illustrate enlarged portions of the engine in Figure 1,
Figure 4 is an end view of a fuel slinger in the engine of Figure 1,
Figure 5 is a modified view of a shaft for the engine of Figure 1,
Figures 6-8 are alternative combustion chamber embodiments for the engine of Figure 1,
Figure 9 is a cross-sectional view of an alternative embodiment of an engine according to the invention, and
Figure 10 is an end view of the compressor end of the engine in Figure 9.

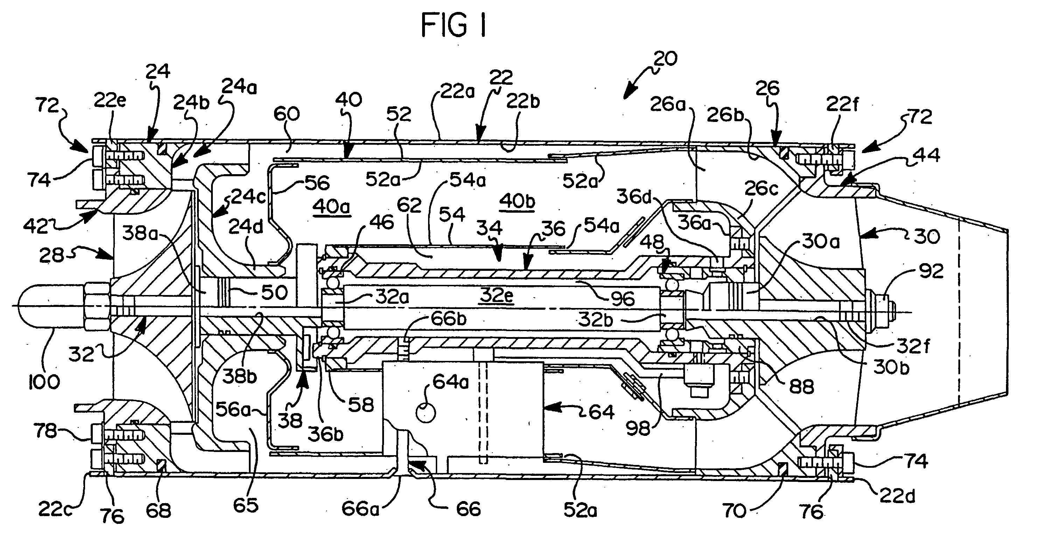

Referring now to Figure 1, therein is illustrated in a longitudinal cross-sectional view of a small gas turbine engine 20 including an outer wall defined by a cylindrical member 22, a diffuser 24, a nozzle 26, a centrifugal flow compressor 28, a turbine 30 which may be of the mixed flow type as illustrated herein having axial and centripetal flow (i.e., flow that is initially radially inward and axial), a shaft 32, a bearing assembly 34 including a bearing support tube 36, a fuel slinger 38, an annular combustion chamber 40 concentric to the shaft and axially interposed the compressor and turbine, and compressor and turbine shrouds 42, 44. Cylindrical member 22 has an outer surface 22a defining the maximum outside diameter of the engine, an inner surface 22b, a forward or air inlet end 22c, and a rearward or exhaust end 22d.

Cylindrical member 22, diffuser 24, nozzle 26, bearing support tube 36, and shrouds 42, 44 are non-rotating components defining the engine housing or support structure. Compressor 28, turbine 30, shaft 32, and slinger 38 are rigidly secured together and define a rotating assembly supported by antifriction bearings 46, 48 in tube 36.

Diffuser 24 and nozzle 26 respectively include a plurality of circumferentially spaced apart guide vanes 24a, 26a secured together by a first support or radially outer portion 24b, 26b and a second support or radially inner portion 24c, 26c. Diffuser inner portion 24c includes an axially extending sleeve 24d having a central opening rotatably receiving a hub portion 38a of fuel slinger 38. A pair of ring seals 50 disposed in grooves in the hub portion seal the rotating interface between the hub and sleeve portions.

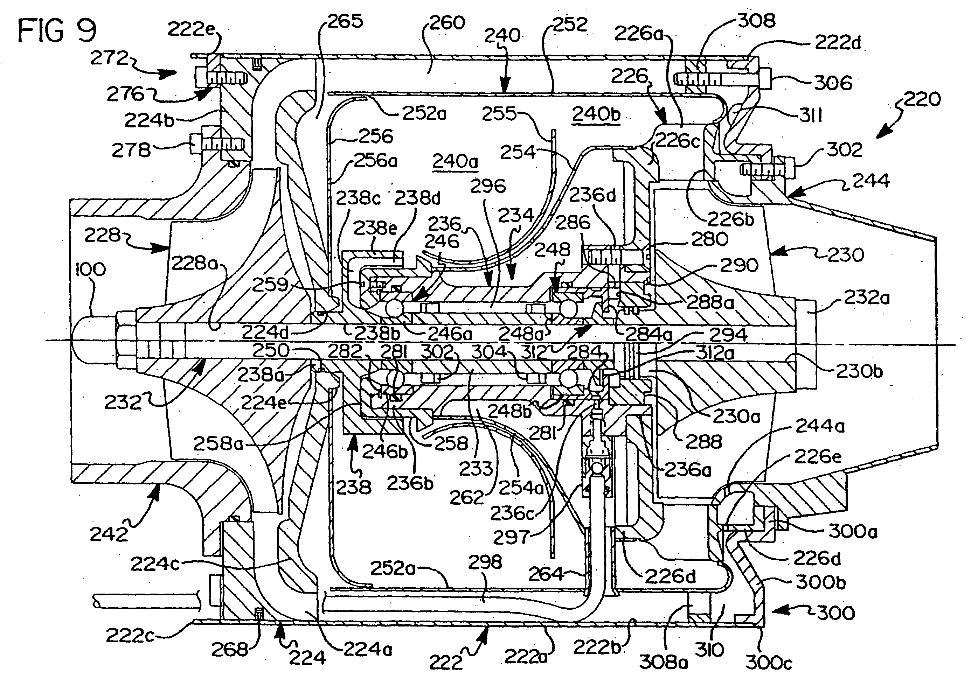

The diffuser and nozzle may be manufactured in many different ways. Herein, as illustrated in the half views of Figures 1A-1D, the diffuser is fabricated of separate support members 24b, 24c having circumferentially spaced apart and angled slots 24e, 24f for snugly receiving the L-shaped guide vanes 24a. Each vane has a radially inwardly extending inlet portion 24g receiving compressor discharge air, and an axially extending portion 24h for turning and axially directing the air into outer annulus 60. A radially outer free edge 24i of each vane snugly contacts inner surface 22b of housing cylinder member 22. Fabricating the diffuser of sperate support and vane members in lieu of casting is believed to be cost effective. However, whether fabricated or cast, the diffuser design has advantageous features that are particularly important in a small turbine engine where length and diameter of the engine must be kept to a minimum. One important feature is provided by a single set of vanes 24a which function as both diffuser and turning vanes. Specifically, the use of L-shaped vanes 24a, which transition radial air flow from the compressor to axial flow to the outer annulus 60, is both cost effective and axially compact. Another important feature is provided by using the inner surface 22b of housing cylindrical member 22 as an outer shroud; this is cost effective and allows the diffuser to have a maximum diameter and flow area within the maximum diameter restraints of the engine. These features and advantages are also incorporated in to the diffuser disclosed in the engine of Figure 9.

Annular combustion chamber 40 is bounded by a radially outer liner 52, a radially inner liner 54, and an end liner 56 extending radially inward from and affixed to a forward or upstream end of the outer liner. Chamber 40 includes a primary combustion zone 40a at a forward or upstream end of the chamber and a secondary combustion zone 40b. A radially inner portion of end liner 56 is supported on nozzle sleeve portion 24d. Inner liner 54 is axially and radially supported at its forward end by a spacer ring 58 affixed to tube 36 and at its rear or exhaust end by an annular extension 26d of nozzle inner portion 26c. Outer wall 22 and outer liner 52 define an outer air annulus 60 receiving compressor discharge air at its forward end from diffuser 24. Inner liner 54 and tube 36 define an inner air annulus 62 receiving air from outer annulus 60 via a plurality of circumferentially spaced apart air tubes 64 each extending substantially radially between openings in the outer and inner lines. Tubes 64 axially position the outer liner relative to the inner liner. Diffuser inner portion 24c and end liner 56 define a forward annulus 65 receiving air from the outer annulus. The liners include openings, apertures, louvers 52a, 54a, 56a or the like for direction of air to the primary and secondary combustion zones. Air tubes 64 preferably have oval cross-sections when viewed radially so as not to unduly restrict flow of combustion gases in chamber 40. Openings in tube 64, such as aperture 64a, supply air to the combustion chamber.

The forward end 36b of tube 36 is supported or stabilized by a plurality circumferentially spaced apart and radially extending adjustable members 66. Herein, the members are screws having heads 66a received in countersunk openings in cylindrical member 22 and ends 66b threadably received in openings in tube 36. Herein, three screws are used. Preferably, the screws extend through air tubes 64 so as to be shielded from direct contact with combustion gases and to be cooled by the flow of air therein.

The diffuser and nozzle radially outer portions 24b, 26b are snugly received by the cylindrical member inner surface 22b at ends 22c, 22d, respectively, and the interface therebetween is sealed by ring seals 68, 70. Seal 70 is preferably made of a heat resistant material. The diffuser and nozzle are secured against movement relative to member 22 by fastener assemblies 72 including screws 74, circumferentially spaced apart openings 22e, 22f in opposite ends of member 22, and lugs 76. The assemblies are described further hereinafter with respect to securing the diffuser in the engine embodiment in Figure 9. Compressor shroud 42 is affixed to the diffuser outer portion by a plurality of circumferentially spaced apart screws 78. Turbine shroud 44 is affixed to the nozzle outer portion by screws 74 of assembly 72.

Bearing assembly 34 includes the bearing support tube 36 extending axially in cantilever fashion from a first end 36a thereof affixed to nozzle inner portion 26c by a plurality of screw fasteners 80. The other end 36b of the tube extends to a position adjacent fuel slinger 38. Shaft 32 is rotatably supported in the tube by the axially spaced apart antifriction bearings 46, 48 which herein are alike and of the ball type. The bearings may be of the angular contact type. Inner races 46a, 48a of the bearings are supported on intermediate diameters 32a, 32b of the shaft and abut shoulders 32c, 32d defined by a major diameter 32e of the shaft. Both bearing outer races 46b, 48b are preferably but not necessarily supported on the interior of tube 36 with radial resilience. Herein, the radial resilience is provided by rings of elastomeric material 81. However, other materials may be used, e.g., resilient heat resistant materials. The outer race 46b is axially retained in the leftward or forward direction by a snap ring 82 received in an annular groove in the tube. The outer race 48b at tube end 36a is carried by a ring 84 and is biased axially leftward by a spring 86 sandwiched between the ring and a sleeve 88 axially retained in the rightward or rearward direction by a snap ring 90 received in an annular groove in the tube. Spring 86 removes axial free play in the bearings.

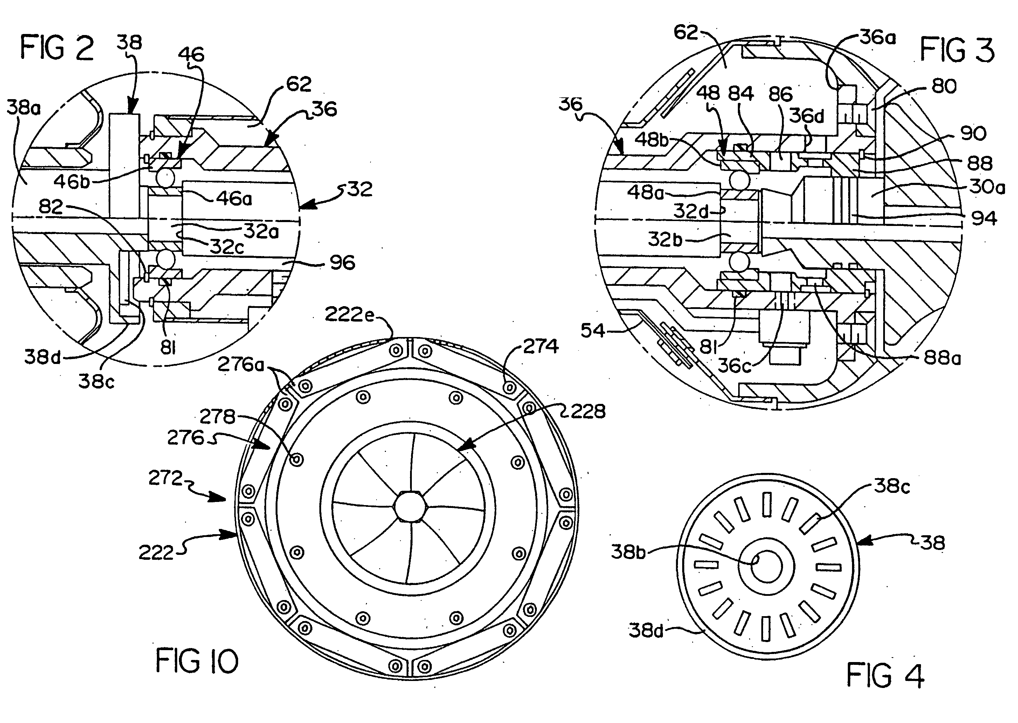

Turbine 30 and an axially extending hub portion 30a thereof, rotatably received in tube end 36a, include a central bore 30b snugly receiving a minor diameter 32f of the shaft. Inner race 48a is tightly sandwiched between the left end of the hub portion and shaft shoulder 32d when the turbine is axially secured to the shaft by a threaded nut 92. A scavenge pump may be disposed between inner race 48a and hub portion 30a as disclosed in the engine embodiment of Figure 9. A pair of heat resistant seals 94 disposed in grooves in the hub portion seal the rotating interface between the hub portion and sleeve 88. As explained further hereinafter, the annular space between the interior of tube 36 and shaft 32 defines an air/fuel annulus flow path 96 for direction of an air/fuel mixture to slinger 38, for lubricating bearings 46, 48 and for cooling turbine hub portion 30a. Fuel is introduced to the air/fuel annulus via an opening 36c in the tube axially between bearing 48, and tube end 36a. Herein, all of the fuel supplied to combustion chamber 40 is directed through flow path 96. Opening 36c is connected to one end of a fuel line 98. The fuel line extends through one of air tubes 64 and is connected at its other end to an unshown source of metered fuel. Air from inner air annulus 62 is introduced to the air/fuel annulus 96 via openings 36d in tube 36 and openings 88a in sleeve 88. Compressor 28 and fuel slinger 38 include central bores 28a, 38b snugly receiving a minor diameter 32g of the shaft. Inner race 46a is tightly sandwiched between the right end of fuel slinger 38 and shaft shoulder 32c when the compressor and slinger are axially secured to the shaft by a threaded nut 100. Fuel slinger 38 may have many configurations. Herein, the slinger has a plurality of radially extending vanes 38c for pumping the fuel mixture from air/fuel annulus 96 to an annular axially extending flange 38d which slings the mixture radially outward into primary combustion zone 40a. Vanes 38c are clearly shown in the axial end view of the slinger in Figure 4. The pumping efficiency of vanes 38c may be improved as disclosed in the engine embodiment of Figure 9.

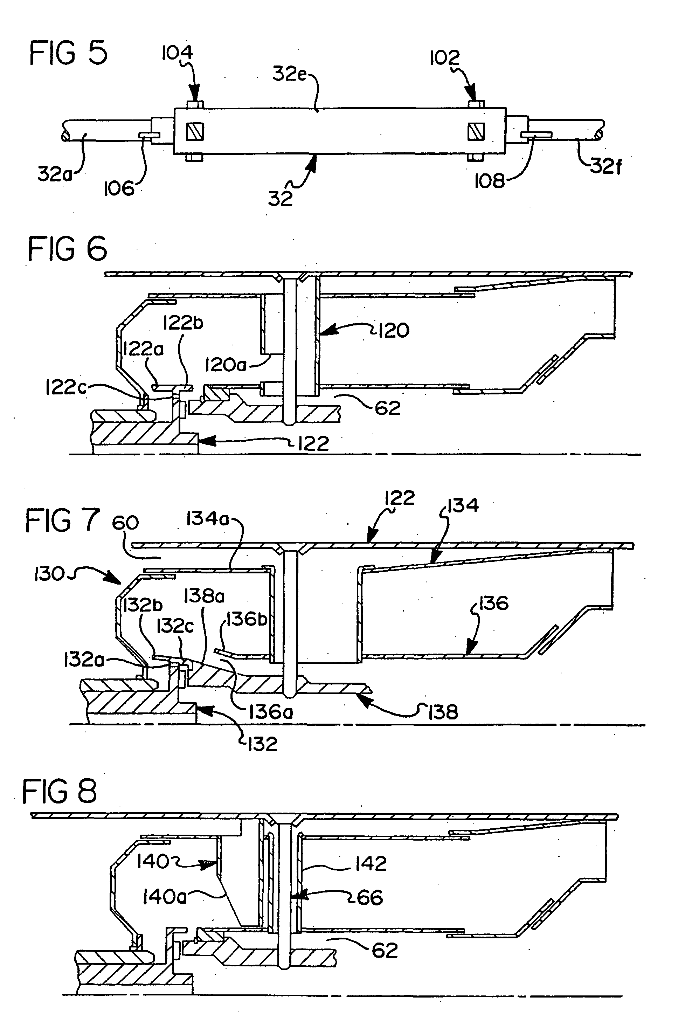

Shaft 32, as shown in Figure 5, may include vane or paddle pumps 102, 104 disposed between bearings 46, 48 to accelerate flow of the air/fuel mixture to the slinger. Pins 106, 108 respectively prevent rotation of the slinger and turbine relative to the shaft.

Figure 6 illustrates alternative air tubes 120 and fuel slinger 122 embodiments for engine 20. Tubes 120 differ from tubes 64 mainly in that a portion of the wall of each air tube 120 has an opening 120a adjacent the radially inner extent of the combustion chamber and facing the primary combustion zone for directing air in a direction substantially transverse to the fuel discharge from the slinger. Slinger 122 differs from slinger 38 by having annular flanges 122a, 122b extending substantially axially in opposite directions. Both flanges sling fuel radially outward into the primary combustion zone. Fuel is supplied to flange 122a by circumferentially spaced apart openings 122c.

Figure 7 illustrates an alternative combustion chamber 130 and fuel slinger 132 embodiments. Chamber 130 includes modified outer and inner liners 134, 136. Outer liner 134 has a forward portion 134a spaced further from outer wall 22 to increase the air flow area of outer air annulus 60. Inner liner 136 is modified to direct air via an opening 136a from inner air annulus 62 to the combustion chamber in a direction substantially transverse to the fuel discharge from the slinger. The opening is between the slinger and the forward axial end of the inner liner. The opening is defined by providing the inner liner with a frusto-conical forward end portion 136b spaced radially outward from a complimentary shaped portion 138a of a modified bearing support tube 138 which is otherwise the same as tube 36. Slinger 132 includes openings 132a for directing fuel to a some what frusto-conical slinger flange 132b, and an axially oppositely extending flange 132c closely spaced from an axially facing end of tube portion a for restricting fuel slinging by flange 132c:

Figure 8 illustrates air tubes 140 with openings 140a for directing air to the primary combustion zone, and separate air tubes 142 directing air to inner air annulus 62 and shielding adjustable members 66.

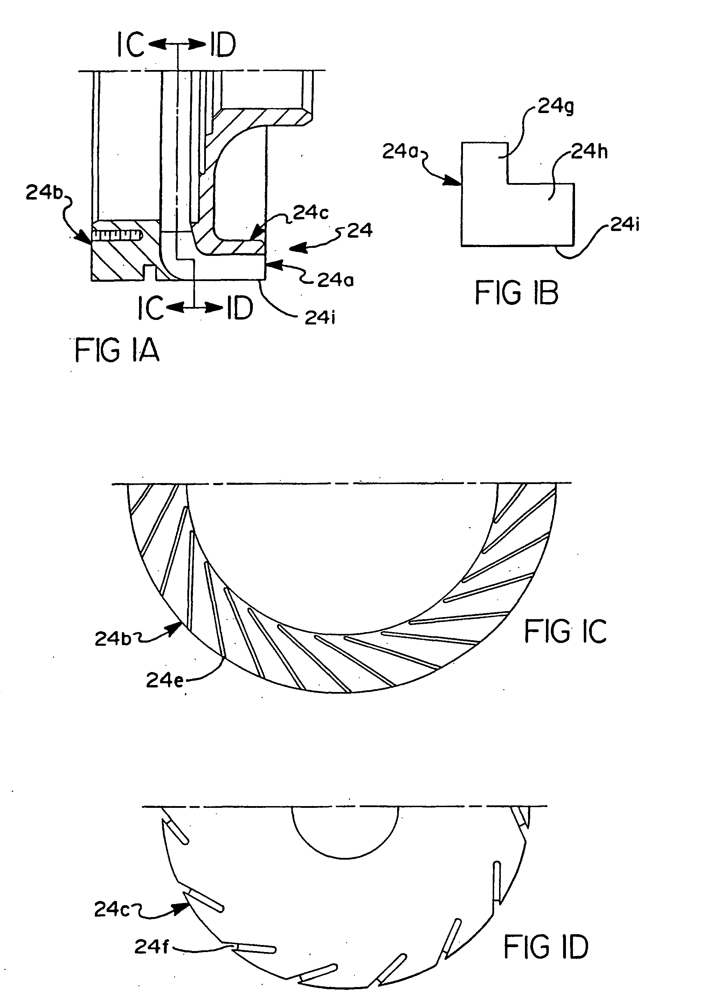

Referring now to Figures 9 and 10, therein is illustrated in a longitudinal cross-sectional view a small gas turbine engine 220 incorporating several of the features in engine 20. Engine 220 includes an outer wall defined by a cylindrical member 222, a diffuser 224, a nozzle 226, a centrifugal flow compressor 228, a centripetal flow turbine 230, a shaft 232, a bearing assembly 234 including a bearing support tube 236, a fuel slinger 238, an annular combustion chamber 240 concentric to the shaft and axially interposed the compressor and turbine, and compressor and turbine shrouds 242, 244. Shaft 232 is rotatably supported by axially spaced apart antifriction bearings 246, 248 in tube 236. Cylindrical member 222 has an outer surface 222a defining the maximum outside diameter of the engine, an inner surface 222b, a forward or air inlet end 222c, and a rearward or exhaust end 222d.

Cylindrical member 222, diffuser 224, nozzle 226, bearing support tube 236, and shrouds 242, 244 are non-rotating components defining the engine housing or support structure.

Diffuser 224 and nozzle 226 respectively include a plurality of circumferentially spaced apart guide vanes 224a, 226a secured together by a first support or radially outer portion 224b, 226b and a second support or radially inner portion 224c, 226c. Diffuser inner portion 224c includes central opening 224d rotatably receiving a hub portion 238a of fuel slinger 238. A ring seal 250 disposed in a groove in the hub portion seals the rotating interface with the hub.

Annular combustion chamber 240 is bounded by a radially outer liner 252, a radially inner liner 254, a subliner 255 and an end liner 256 extending radially inward from and affixed to a forward or upstream end of the outer liner. Chamber 240 includes a primary combustion zone 240a at a forward or upstream end of the chamber and a secondary combustion zone 240b. A radially inner portion of end liner 256 is supported on an annular shoulder 224e of the diffuser inner portion. Inner liner 254 is radially and axially supported at its forward end by support tube 236 and an annular trough like member 258 affixed to a forward end 236b of the bearing support tube by screws 259 and is supported at its rear or exhaust end by an annular extension 226d of nozzle inner portion 226c. Outer wall 222 and outer liner 252 define an outer air annulus 260 receiving compressor discharge air at its forward end from diffuser 224. Inner liner 254 and tube 236 define an inner air annulus 262 receiving air from outer annulus 260 via a plurality of circumferentially spaced apart air tubes 264 each extending substantially radially between openings in the outer liner and inner line 254. Diffuser inner portion 224c and end liner 256 define a forward annulus 265 receiving air from the outer annulus. Liners 252, 254, 256 include openings, apertures, louvers 252a, 254a, 256a or the like for direction of air to the primary and secondary combustion zones. Subliner 255 provides a hot surface for combustion zone 240a while creating a passage directing air flow from inner annulus 262 to combustion zone 240a. The diffuser radially outer portion 224b, is snugly received by the cylindrical member inner surface 222b at end 222c and the interface therebetween is sealed by ring seal 268. The diffuser is secured against movement relative to member 222 by fastener assemblies 272 including screws 274, circumferentially spaced apart openings 222e in opposite ends of member 222, and lugs 276. As may be seen in the reduced size end view of Figure 10 and partially sectioned portion of member 222, radially outer portion 276a of lugs 276 extend into openings 222e and are secured radially inward thereof by screws 274. Assemblies 272 are substantially the same as the assemblies 72. Compressor shroud 242 is affixed to the diffuser outer portion by a plurality of circumferentially spaced apart screws 278. An annular flange portion 226d of nozzle 226, a radially inner portion 300a of a wall 300b of an annular end bracket 300, and turbine shroud 244 are secured together by a plurality of screws 302. An outer circumferential portion 300c of wall 300b abuts cylindrical member end 222d and is secured against movement relative thereto by a plurality of circumferentially spaced apart screws 306 threadably received by a support ring 308 affixed to member 222. Ring 308 also supports outer liner 252 and includes a plurality of circumferentially spaced through openings 308a for directing cooling air from outer annulus 260 to a rear air annulus 310 defined by nozzle support 226b, bracket wall 300b and turbine shroud 244. The air is discharged into the turbine by passages 244a in shroud 244 and the flow rate is regulated by passages 226e in nozzle flange portion 226d. The rearward position of outer liner 252 is maintained by a plurality circumferentially disposed projections 311.

Bearing assembly 234 includes the bearing support tube 236 extending axially in cantilever fashion from a first end 236a thereof affixed to nozzle inner portion 226c by a plurality of screw fasteners 280. Member 258, affixed to the other end 236b of tube 236, extends to a position adjacent fuel slinger 238. Shaft 232 is rotatably supported in the tube by the axially spaced apart antifriction bearings 246, 248 which herein are alike and of the ball type. Inner races 246a, 248a of the bearings are supported on shaft 232 and spaced apart by a cylindrical member 233 having vanes or paddle pumps 302, 304 analogous to pumps 102, 104 in Figure 6. Both bearing outer races 246b, 248b are preferably but not necessarily supported on the interior of tube 236 with radial resilience. Herein, the radial resilience is provided by rings of elastomeric material 281. However, other materials may be used, ,e.g., resilient heat resistant materials. The outer race 246b is axially retained in the leftward or forward direction by a snap ring 282 received in an annular groove in the tube. The outer race 248b at tube end 236a is carried by a ring 284 and is biased axially leftward by a spring 286 sandwiched between the ring and a sleeve 288 axially retained in the rightward or rearward direction by a snap ring 290 received in an annular groove in the tube. Spring 286 removes axial free play in the bearings.

Turbine 230 and an axially extending hub portion 230a thereof, rotatably received in tube end 236a, include a central bore 230b snugly receiving shaft 232. A scavenge pump 312 is axially disposed between bearing race 248a and turbine hub 230a. The pump includes radially extending vanes 312a analogous to the fuel slinger vanes 38c. The vanes may have a backward slope angle. Pumping efficiency of the vanes is improved by a flange 284a extending radially inward from ring 284 to a position closely spaced from the axial free ends of vanes 312a. A pair of heat resistant seals 294 disposed in grooves in the hub portion seal the rotating interface between the hub portion and sleeve 288. The annular space between the interior of tube 236 and shaft 232 defines an air/fuel annulus flow path 296 for direction of an air/fuel mixture to slinger 238, for lubricating bearings 246, 248 and for cooling turbine hub portion 230a. Fuel is introduced to the air/fuel annulus via an opening 236c in the tube axially between bearing 248 tube end 236a, opening 236c is connected via a check valve 297 to one end of a fuel line 298. The fuel line extends through one of air tubes 264 and is connected at its other end to an unshown source of metered fuel. Air from inner air annulus 262 is introduced to the air/fuel annulus 296 via openings 236d in tube 236 and openings 288a in sleeve 288. Any fuel that may enter the space between fuel and air openings 236c, 288a is removed by the scavenge pump. The scavenge pump also improves mixing of the air/fuel mixture, as do the other pumps, and assists pumping of the mixture to the slinger. In actual practice screw 280 does not pass through opening 236d. Compressor 228 and fuel slinger 238 include central bores 228a, 238b snugly receiving shaft 232. Slinger 238 is axially positioned between bearing race 246a and turbine 228. The rotating assembly comprising compressor 228, slinger 238, the bearings and spacer therebetween, scavenge pump 306, and turbine 230 are axially and rotatably secured together between a head portion 232a of the shaft and a threaded nut 100.

Fuel slinger 238, like slinger 38, may have many configurations. Herein, slinger 238 has a plurality of vanes having radially extending portions 238c and axially extending portions 238d formed on the inner circumference of an axially extending flange 238e. Vanes 238c, like vanes 38c, pump the fuel mixture from air/fuel annulus 296 to flange 238e which slings the mixture radially outward into primary combustion zone 240a. The pumping efficiency of vanes 238c, like vanes 312a is improved by close axial spacing of an axially facing end 258a of trough like member 258. The pumping efficiency of slinger vanes 38c may be improved in the same manner.

It will be appreciated that although particular arrangements, illustrative of the invention have been described, by way of example, variations and modifications thereof, as well as other arrangements may be conceived within the scope of the appended claims.

## Claims

1. A gas turbine engine (20 or 220) comprising a housing (222) including an outer wall (222) having an air inlet and an exhaust outlet affixed to opposite ends thereof, a shaft (232), a bearing assembly (234) including first and second axially spaced apart antifriction bearings (246,248) mounting the shaft (232) for rotation in the housing about an axis, a compressor (228) affixed to the shaft (232) at a position adjacent the inlet, a turbine (230) affixed to the shaft (232) at a position adjacent the exhaust and axially spaced from the compressor (228), an annular combustion chamber (240) including radially spaced apart inner and outer liners (254,252) and an end liner (256) extending radially inward from an end of the outer liner at a primary combustion zone end (240a) of the chamber (240) and axially upstream of an exhaust end of the chamber, the liners (254,252) being concentric to the shaft and disposed between the compressor (228) and turbine (230), an outer annulus (260) defined between the outer wall (222) and outer liner (252), a diffuser (224) affixed at a first support portion (224b) thereof to the housing and for directing compressor discharge air into the outer annulus (260), a nozzle (226) affixed at a first support portion (226b) thereof to the housing and for directing exhaust from combustion chamber (240) to the turbine (230), a fuel slinger (238) affixed to the shaft (232) and positioned to discharge fuel radially outward into the primary combustion zone (240a), means (252a,254a,256a,264) for directing air from the outer annulus (260) to the combustion chamber (240), and air/fuel delivery means (236d,236c) supplying air from the outer annulus (260) and fuel to the first bearing (246) and then to the fuel slinger (238), **characterised by** the bearing assembly (234) including a support tube (236) concentric to the shaft (232) and affixed to the housing between the compressor (228) and turbine (230), the tube having a first end (236a) positioned adjacent the turbine (230) and a second end (236b) positioned adjacent the slinger (238), the first and second bearings (248,246) respectively associated with the tube first and second ends (236a,236b) and supporting the shaft on interior portions of the tube, an air/fuel annulus (296) defined between the support tube (236) and shaft (232) and providing a flow path for supplying an air/fuel mixture to the slinger (238) and for lubricating the bearings (248,246), and the air/fuel delivery means (236d,236c) supplying the air/fuel mixture to the air/fuel annulus (296) at a position axially interposed between the tube first end (236a) and the first bearing (248).

2. An engine as claimed in claim 1 wherein the tube (236) extends axially in cantilever fashion from the first end (236a) thereof affixed to the nozzle inner portion (226c) to a second end (236b) thereof adjacent the slinger (238).

3. An engine as claimed in claim 1 or claim 2, wherein the turbine (230) includes a hub portion (230a) extending axially into the air/fuel annulus (296) for cooling by the air/fuel mixture therein.

4. An engine as claimed in claim 1 or claim 3 including pump means (302,304,312) disposed in the air/fuel annulus (296) and driven by the shaft (232) for pumping the air/fuel mixture towards the slinger (238).

5. An engine as claimed in claim 4, wherein the pump means includes pump means (312) positioned upstream of the bearings (248,246).

6. An engine as claimed in claim 4 or claim 5 wherein the pump means includes pump means (302,304) positioned between the bearings (248,246).

7. An engine as claimed in claim 6, wherein upstream pump means (312) includes a plurality of radially disposed vanes (312a) for pumping the air/fuel mixture along the air/fuel annulus (296).

8. An engine as claimed in claim 7, wherein upstream pump means vanes (312a) include axially facing free ends and a non-rotating shroud surface (284a) in close axial spaced relation to the vane free ends for improving the pumping efficiency thereof.

9. An engine as claimed in claim 1, wherein the fuel slinger (238) includes a plurality of radially disposed vanes (238c) for pumping the air/fuel mixture from the air/fuel annulus (236) and radially outward into the primary combustion zone (240a).

10. An engine as claimed in claim 9, wherein the fuel slinger vanes (238c) include axially facing free ends and a non-rotating shroud surface (258a) in close axial spaced relation to the vane free ends for improving the pumping efficiency thereof.

11. An engine as claimed in claim 1, including an inner annulus (262) defined between the inner liner (254) and the support tube (236), and a plurality of circumferentially spaced-apart air tubes (264) each extending substantially radially between openings in the outer and inner liners (252,254) for communicating air from the outer annulus (260) to the inner annulus (262).

12. An engine as claimed in claim 11, including a fuel line (298) for supplying metered fuel to the slinger (238), the line (298) extending through one of the air tubes (264) to an opening (236c) in the support tube (236) at a position axially interposed between the tube first end (236a) and the first bearing (248).

13. An engine as claimed in claim 1 or claim 2, wherein the diffuser (224) includes a radially inward portion (224d) with a central opening having the shaft (232) rotatably extending therethrough, a forward annulus (265) defined between the diffuser inward portion (224d) and the end liner (256) and communicating with the outer annulus (260), and apertures (256a) in the end liner (256) for directing air from the forward annulus (265) to the chamber (240).

14. An engine as claimed in claim 13, including a second passage (120a,136a,140a) opening into the chamber (240) between the slinger (238) and an axial end portion of the inner liner (254) for directing air from the inner annulus (262) to the chamber (240) in a direction substantially transverse to the fuel discharge from the slinger (238).

## Patentansprüche

1. Gasturbinentriebwerk (20 oder 220) umfassend:
- ein Gehäuse (222) mit einer Außenwand (222), das an gegenüberliegenden Enden einen Lufteinlass und einen Luftauslass aufweist,
- eine Achse (232),
- eine Lageranordnung (234) mit einem ersten und einem zweiten, axial voneinander getrennten reibungsfreien Lager (246, 248), die die Achse (232) zur axialen Rotation in dem Gehäuse lagern,
- einen an der Achse (232) neben dem Einlaß befestigten Kompressor (228),
- eine Turbine (230), die an der Achse (232) neben dem Auslaß befestigt ist und axial vom Kompressor (228) getrennt ist,
- eine ringförmige Verbrennungskammer (240) mit radial getrennten inneren und äußeren Einsätzen (254, 252) und einem Endeinsatz (256), der an einem Hauptverbrennungszonenende (240a) der Kammer (240) von einem Ende des äußeren Einsatzes radial nach innen und axial bezüglich der Stromrichtung vor dem Auslaßendes der Kammer verläuft, wobei die Einsätze (254, 252) konzentrisch zu der Achse und zwischen dem Kompressor (228) und der Turbine (230) angeordnet sind,
- eine durch die äußere Wand (222) und den äußeren Einsatz (252) definierte, äußere Ringkammer (260),
- einen mit seinem einen ersten Trägerabschnitt (224b) an dem Gehäuse befestigten Diffusor (224) zum Einleiten der Kompressorausstoßluft in die äußere Ringkammer (260),
- eine mit ihrem einen ersten Trägerabschnitt (226b) an dem Gehäuse befestigte Düse (226) zum Leiten des Verbrennungskammeraustoßes (240) zur Turbine (230),
- eine an der Achse (232) befestigte Brennstoffaustrittsvorrichtung (238), die derart positioniert ist, dass der Brennstoff radial nach außen in die Hauptverbrennungszone (240a) austritt,
- Vorrichtungen (252a, 254a, 256a, 264) zum Einleiten von Luft von der äußeren Ringkammer (260) in die Verbrennungskammer (240), und
- Luft/Brennstoffzulieferungsvorrichtungen (236d, 236c), um dem ersten Lager (246) und dann der Brennstoffaustrittsvorrichtung (238) Luft von der äußeren Ringkammer (260) und Brennstoff zu liefern,
**dadurch gekennzeichnet, daß**
- die Lageranordnung (234) eine zu der Achse (232) konzentrische Stützröhre (236) beinhaltet, die an dem Gehäuse zwischen dem Kompressor (228) und der Turbine (230) befestigt ist, wobei die Röhre ein neben der Turbine (230) angeordnetes erstes Ende (236a) und ein neben der Brennstoffaustrittsvorrichtung (238) angeordnetes zweites Ende (236b) aufweist, wobei das erste und das zweite Lager (248, 246) entsprechend dem ersten und dem zweiten Ende der Röhre (236a, 236b) zugeordnet sind und die Achse im Innenraum der Röhre tragen,
- eine durch die Stützröhre (236) und die Achse (232) begrenzte Luft/Brennstoffringkammer (296) vorhanden ist, die einen Durchflußweg bereitstellt, um der Brennstoffaustrittsvorrichtung (238) ein Luft/Brennstoffgemisch zu liefern und die Lager (248, 246) zu schmieren; und
- die Luft/Brennstoffzuleitungsvorrichtungen (236d, 236c) das Luft/Brennstoffgemisch der Luft/Brennstoffringkammer (296) an einem Ort axial zwischen dem ersten Röhrenende (236a) und dem ersten Lager (248) bereitstellen.

2. Triebwerk nach Anspruch 1, wobei die Röhre (236) in Cantilever-weise axial von ihrem an dem inneren Abschnitt (226c) der Düse befestigten ersten Ende (236a) zu ihrem zweiten Ende (236b) neben der Brennstoffaustrittsvorrichtung (238) verläuft.

3. Triebwerk nach Anspruch 1 oder 2, wobei die Turbine (230) einen axial in die Luft/Brennstoffringkammer (296) hineinragenden Nabenabschnitt (230a) umfaßt, um durch das darin befindliche Luft/Brennstoffgemisch gekühlt zu werden.

4. Triebwerk nach Anspruch 1 oder 3 mit in der Luft/Brennstoffringkammer (296) angeordneten und von der Achse (232) angetriebenen Pumpenvorrichtungen (302, 304, 312), um das Luft/Brennstoffgemisch in Richtung der Brennstoffaustrittsvorrichtung (238) zu pumpen.

5. Triebwerk nach Anspruch 4, wobei die Pumpenvorrichtungen stromaufwärts der Lager (248, 246) angeordnete Pumpenvorrichtungen (312) umfassen.

6. Triebwerk nach Anspruch 4 oder 5, wobei die Pumpenvorrichtungen zwischen den Lagern (248, 246) angeordnete Pumpenvorrichtungen (302, 304) umfassen.

7. Triebwerk nach Anspruch 6, wobei die strömungsaufwärts angeordneten Pumpenvorrichtungen (312) eine Vielzahl an radial angeordneten Flügeln (312) zum Pumpen des Luft/Brennstoffgemischs entlang der Luft/Brennstoffringkammer (296) umfassen.

8. Triebwerk nach Anspruch 7, wobei die stromaufwärts angeordneten Pumpenvorrichtungsflügel (312a) axial gerichtete freie Enden und eine sich nicht drehende, in engem axialen Abstand zu den freien Enden der Flügel stehende Abdeckfläche (284a) umfassen, um die Pumpeneffizienz zu verbessern.

9. Triebwerk nach Anspruch 1, wobei die Brennstoffaustrittsvorrichtung (238) eine Vielzahl von radial angeordneten Flügeln (238a) umfaßt, um das Luft/Brennstoffgemisch der Luft/Brennstoffringkammer (296) radial nach außen in die Hauptverbrennungszone (240a) zu pumpen.

10. Triebwerk nach Anspruch 9, wobei die Brennstoffaustrittsvorrichtungsflügel (238c) axial gerichtete freie Enden und eine sich nicht drehende, in engem axialen Abstand zu den freien Enden der Flügel stehende Abdeckfläche (284a) umfassen, um die Pumpeneffizienz zu verbessern.

11. Triebwerk nach Anspruch 1 mit einer durch den inneren Einsatz (254) und die Stützröhre begrenzten inneren Ringkammer (262) und einer Vielzahl von ringsum getrennten Luftröhren (264), die jeweils im wesentlichen radial zwischen den Öffnungen in den äußeren und den inneren Einschüben (252, 254) verlaufen, um eine Luftverbindung zwischen der äußeren Ringkammer (260) und der inneren Ringkammer (262) bereitzustellen.

12. Triebwerk nach Anspruch 11 mit einer Brennstoffleitung (298), um dosiert Brennstoff an der Brennstoffaustrittsvorrichtung (238) bereitzustellen, wobei die Leitung durch eine der Luftröhren (264) zu einer Öffnung (236c) in der Stützröhre (236) verläuft, die axial zwischen dem ersten Ende der Röhre (236a) und dem ersten Lager (248) angeordnet ist.

13. Triebwerk nach Anspruch 1 oder 2, wobei der Diffusor (224) umfasst:
- einen radial nach innen verlaufenden Teil (224d) mit einer zentralen Öffnung durch die die Achse (232) drehbar verläuft,
- eine vordere Ringkammer (265), die durch den inwendigen Abschnitt (224d) des Diffusors und den Endeinsatzes (256) begrenzt ist und in Verbindung mit der äußeren Ringkammer (260) steht, und
- Öffnungen (256a) in dem Endeinsatz (256), um Luft von der vorderen Ringkammer (265) in die Kammer (240) zu leiten.

14. Triebwerk nach Anspruch 13, mit einem zweiten sich in die Kammer öffnenden Durchflussweg (120a, 136a, 140a) zwischen der Brennstoffaustrittsvorrichtung (238) und einem axialen Ende des inneren Einsatzes (254), um Luft in einer im wesentlichen transversalen Richtung zum Brennstoffausstoß der Brennstoffaustrittsvorrichtung (238) von der inneren Ringkammer (262) in die Kammer (240) zu leiten.

## Revendications

1. Turbine à gaz (20 ou 220) comprenant un corps (222) incluant une paroi externe (222) dotée d'une arrivée d'air et d'une sortie d'air à ses extrémités opposées, un arbre (232), un ensemble palier (234) comprenant un premier et un deuxième roulement (245,243) espacés axialement, montés sur l'arbre (232) pour permettre la rotation dans le corps autour d'un axe, un compresseur (228) fixé sur l'arbre (232) à proximité de l'arrivée, une turbine (230) fixée sur l'arbre (232) à proximité de la sortie et espacée axialement du compresseur (228), une chambre de combustion annulaire (240) comprenant une enveloppe intérieure et une enveloppe extérieure (254, 252) espacées radialement, et un revêtement de bout (256) se prolongeant vers l'intérieur dans l'axe radial, d'une extrémité de l'enveloppe extérieure à une extrémité de la zone de combustion primaire (240a) de la chambre (240) et axialement en amont d'une sortie de la chambre, les enveloppes (254,252) étant positionnées de façon concentrique par rapport à l'arbre et disposées entre le compresseur (228) et la turbine (230), un espace annulaire (260) défini entre la paroi extérieure (222) et l'enveloppe extérieure (252), un diffuseur (224) fixé sur une première partie support (224b) du corps et servant à diriger l'air de décharge du compresseur dans l'espace annulaire (260), une ailette (226) fixée sur une première partie support (226b) du corps et servant à diriger la sortie de la chambre de combustion (240) vers la turbine (230), un chasse-goutte de carburant (238) fixé à l'arbre (232) positionné pour évacuer le carburant radialement vers l'extérieur dans la zone de combustion primaire (240a), des dispositifs (252a, 254a, 256a, 264) servant à diriger l'air de l'espace annulaire (260) vers la chambre de combustion (240), et des dispositifs d'alimentation air/carburant (236d, 236c) envoyant de l'air de l'espace annulaire (260) et du carburant vers le premier palier (246) puis au chasse-goutte de carburant (238), **caractérisé par** l'ensemble palier (234) comprenant un tube support (236) concentrique par rapport à l'arbre (232) et fixé sur le corps entre le compresseur (228) et la turbine (230), le tube comportant une première extrémité (236a) adjacente à la turbine (230) et une deuxième extrémité (236b) adjacente au chasse goutte (238), les premier et deuxième paliers (248, 246) étant respectivement associés à la première et à la deuxième extrémités (236a, 236b) du tube et supportant l'arbre sur les parties intérieures du tube, un anneau air/carburant (296) défini entre le tube support (236) et l'arbre (232) et fournissant un canal de passage pour alimenter le chasse-goutte (238) avec un mélange air/carburant et pour lubrifier les paliers (248,246), et les dispositifs d'alimentation air/carburant (236d, 236c) alimentant l'anneau air/carburant (296) avec un mélange air/carburant positionné axialement entre la première extrémité du tube (236a) et le premier palier (248).

2. Turbine à gaz suivant la revendication 1, dans laquelle le tube (236) se prolonge dans le sens axial en porte à faux, de la première extrémité (236a) fixée sur la partie intérieure de l'ailette (226c) vers une seconde extrémité (236b) adjacente au chasse-goutte (238).

3. Turbine à gaz suivant la revendication 1 ou 2, dans laquelle la turbine (230) comprend une partie moyeu (230a) se prolongeant dans le sens axial dans l'anneau air/carburant (296) pour permettre le refroidissement par le mélange air/carburant qui y est contenu.

4. Turbine à gaz suivant les revendications 1 ou 3, comprenant un dispositif de pompe (302, 304, 312), placé dans l'anneau air/carburant (296) et entraîné par l'arbre (232) et servant à pomper le mélange air/carburant vers le chasse-goutte (238).

5. Turbine à gaz suivant la revendication 4, dans laquelle le dispositif de pompage comprend une pompe (312) placée en amont des paliers (248, 246).

6. Turbine à gaz suivant les revendications 4 ou 5, dans laquelle le dispositif de pompe comprend des pompes (302, 304) placées entre les paliers (248, 246).

7. Turbine à gaz suivant la revendication 6, dans laquelle la pompe placée en aval (312) comprend plusieurs aubes disposées radialement (312a), pour pomper le mélange air/carburant le long de l'anneau air/carburant (296).

8. Turbine à gaz suivant la revendication 7, dans laquelle les aubes (312a) de la pompe placée en amont comprennent des extrémités libres dirigées dans le sens axial et un flasque fixe (284a) placé dans le sens axial proche des extrémités libres des aubes, pour améliorer leur efficacité de pompage.

9. Turbine à gaz suivant la revendication 1, dans laquelle le chasse-goutte de carburant (238) comprend plusieurs aubes (238c) disposées dans le sens radial, et servant à pomper le mélange air/carburant de l'anneau air/carburant (236) et vers l'extérieur dans le sens radial vers la zone de combustion primaire (240a).

10. Turbine à gaz suivant la revendication 9, dans laquelle, les aubes (238c) du chasse-goutte de carburant comportent des extrémités libres faisant face dans le sens axial et un flasque fixe (258a) placé à proximité, dans le sens axial, des extrémités libres des aubes, pour améliorer leur efficacité de pompage.

11. Turbine à gaz suivant la revendication 1, comprenant un espace annulaire intérieur (262) défini entre l'enveloppe intérieure (254) et le tube support (236), et plusieurs tubes à air (264) placés en circonférence, chacun se prolongeant radialement entre les ouvertures des enveloppes intérieure et extérieure (252,254) pour permettre la communication de l'air entre l'espace annulaire extérieur (260) et l'espace annulaire intérieur (262).

12. Turbine à gaz suivant la revendication 11, comprenant une ligne de carburant (298) pour alimenter le chasse-goutte (238) en carburant mesuré, la ligne (298) se prolongeant à travers l'un des tubes à air (264) jusqu'à une ouverture (236c) positionnée dans le tube support (236), s'interposant dans le sens axial entre la première extrémité du tube (236a) et le premier palier (248).

13. Turbine à gaz suivant la revendication 1 ou 2, dans laquelle le diffuseur (224) comprend une partie tournée vers l'intérieur dans le sens radial (224d), dont l'ouverture centrale est traversée par l'arbre (232) rotatif, un espace annulaire avant (265) défini entre la partie intérieure du diffuseur (224d) et le revêtement de bout (256), et communicant avec l'espace annulaire extérieur (260), et les ouvertures (256a) situées dans le revêtement de bout (256), servant à diriger l'air provenant de l'espace annulaire avant (256) vers la chambre (240).

14. Turbine à gaz suivant la revendication 13, comprenant un deuxième passage (120a, 136a, 140a) ouvrant sur la chambre (240) entre le chasse-goutte (238) et une extrémité axiale de l'enveloppe intérieure (254), pour diriger l'air provenant de l'espace annulaire intérieur (262) vers la chambre (240) dans un sens pratiquement transversal par rapport à la décharge de carburant du chasse-goutte (238).
